# EUROPÄISCHE PATENTANMELDUNG

(11) **EP 0 812 746 A2**
(43) Veröffentlichungstag der Anmeldung: **17.12.1997**
(21) Anmeldenummer: 97107607.0
(22) Anmeldetag: 09.05.1997
(51) Int. Cl.: B60T 1/087, F16D 57/04

(54) **Antriebs-Baugruppe mit einem Retarder und einem Wärmetauscher**

(30) Priorität: 14.06.1996 DE 19623679
(71) Anmelder: Voith Turbo GmbH & Co. KG, 89522 Heidenheim (DE)
(72) Erfinder: Friedrich, Jürgen, 74564 Crailsheim (DE); Adams, Werner, 74564 Crailsheim (DE); Vogelsang, Klaus, 74564 Crailsheim (DE); Mandlik, Manfred, 74564 Crailsheim (DE)
(74) Vertreter: Weitzel, Wolfgang, Dr.-Ing.

(57) **Zusammenfassung**

Die Erfindung betrifft eine Antriebsbaugruppe
mit einem Retarder (10),
mit einem Wärmetauscher,
mit einem Adapter (20), der Kanäle zum Leiten der Arbeitsmedien und/oder des Kühlmediums aufweist.

Adapter, Retarder, Wärmetauscher und ggf. ein Getriebe sind mechanisch unmittelbar zusammengefügt und durch die Kanäle des Adapters leitend miteinander verbunden.

## Beschreibung

Die Erfindung betrifft eine Antriebs-Baugruppe, die u.a. einen Retarder und einen Wärmetauscher umfaßt. Eine Antriebseinheit mit einem Retarder und einem Wärmetauscher ist aus DE 44 40 165 A1 bekanntgeworden.

Hydrodynamische Retarder kommen wegen ihrer besonderen Eigenschaften in letzter Zeit immer mehr zur Anwendung. Dies geht vor allem auf deren Eigenschaft zurück, verschleißfrei und ermüdungsfrei zu bremsen. Beim Bremsbetrieb fällt allerdings Wärme an, die abgeführt werden muß.

Die Hersteller von Fahrzeugen verlangen eine möglichst kompakte Bauweise der Einzelaggregate, somit der Retarder, der zugehörenden Wärmetauscher sowie der Getriebe. Außerdem sollen die genannten Bauteile bedienungs- und wartungsfreundlich sein. Ein kritischer Punkt bei Antriebseinheiten besteht häufig in den Anschlüssen zwischen einzelnen Bauteilen, und zwar in Gestalt der Verbindungsleitungen, die meist aus Gummi-, Kunststoff- oder Metallschläuchen bestehen, z.B. zwischen dem Wärmetauscher und dem Retarder oder dem Wärmetauscher und dem Getriebe. Alle diese Probleme sind bisher nicht optimal gelöst.

Der Erfindung liegt daher die Aufgabe zugrunde, eine Antriebs-Baugruppe, umfassend einen Retarder, einen Wärmetauscher und ggf. ein Getriebe, derart zu gestalten und die Einzelteile derart einander zuzuordnen, daß die gesamte Baugruppe kompakt, raumsparend und betriebssicher ist, außerdem bedienungs- und wartungsfreundlich und sich relativ leicht montieren läßt, so daß die Herstellungskosten gesenkt werden können.

Diese Aufgabe wird durch die Merkmale von Anspruch 1 gelöst.

Die Erfinder sehen als Kernstück einer Antriebs-Baugruppe einen Adapter vor. Dieser Adapter ist als zentrales Bauteil mechanisch mit Retarder, Wärmetauscher und ggf. dem Getriebe verbunden. Er weist in seinem Inneren Kanäle auf, damit er mit den genannten Bauteilen auch leitend verbunden werden kann.

Ein solcher Adapter füllt mehrere Funktionen gleichzeitig aus: Zum einen verbindet er die genannten Bauteile, nämlich den Wärmetauscher, Retarder und ggf. das Getriebe auf mechanische Weise. Zum zweiten stellt er zwischen den genannten Bauteilen mittels seiner Kanäle leitende Verbindungen her. Schließlich erlaubt er ein rasches und unmittelbares Anschließen des Wärmetauschers und des Retarders sowie ggf. des Getriebes, und zwar unter völliger Vermeidung von Schläuchen.

Die Erfindung ist anhand der Zeichnung näher erläutert. Darin ist im einzelnen folgendes dargestellt;
- Fig. 1: zeigt in schematischer Darstellung einen hydrodynamischen Retarder.
- Fig. 2: zeigt den Retarder sowie einen hiermit verbundenen und an diesen angeschlossenen Adapter.
- Fig. 3: ist eine Draufsicht auf den Adapter gemäß Figur 2 in aufgeschnittenem Zustand.
- Fig. 4: ist eine Schnittansicht gemäß der Schnittlinie B-B in Figur 3.

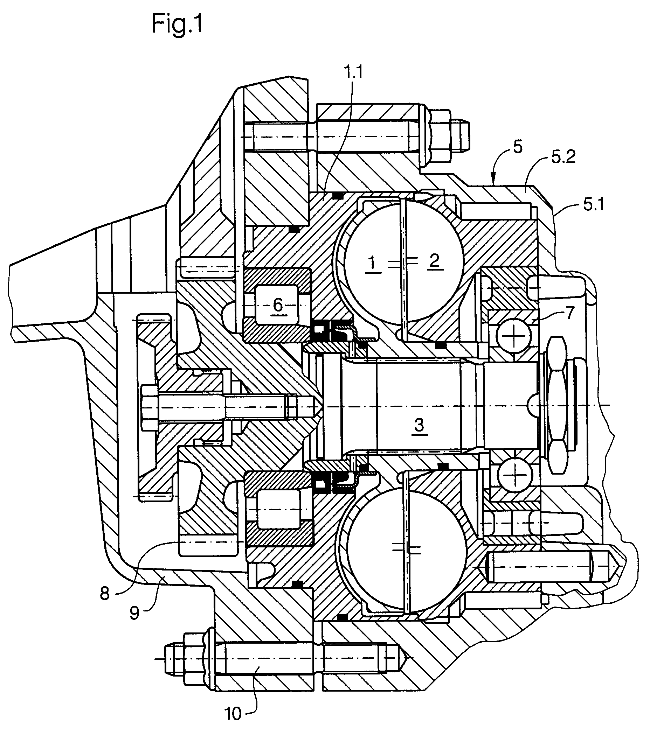

Figur 1 zeigt in schematischer Darstellung einen Retarder mit einem Rotorschaufelrad 1 und einem Statorschaufelrad 2, die miteinander einen torusförmigen Arbeitsraum bilden. Der Rotor ist auf der Retarderwelle 3 aufgekeilt. Er ist von einem Rotorgehäuse 1.1 umschlossen. Man erkennt ferner das Retardergehäuse 5, das Rotor 1 und Stator 2 aufgenommen hat. Wie man sieht, ist es topfförmig ausgebildet, mit einem Topfboden 5.1 und einer zylindrischen Umfangswand 5.2.

Die Retarderwelle 3 ist am Rotorgehäuse 1.1 und am Stator 2 gelagert, und zwar durch Radiallager 6 bzw. 7.

Die Rotorwelle 3 trägt ein Zahnrad 8, das eine Schrägverzahnung aufweist, mit dem ein Drehmoment vom Getriebe her in den Retarder eingeleitet wird.

Man erkennt ferner einen Teil des Getriebe-Endgehäuses 9.

Mehrere Schrauben 10, die konzentrisch zur Retarderwelle 3 angeordnet sind, sind durch entsprechende Bohrungen im Getriebe-Endgehäuse hindurchgeführt und in Gewindebohrungen des Retardergehäuses eingeschraubt.

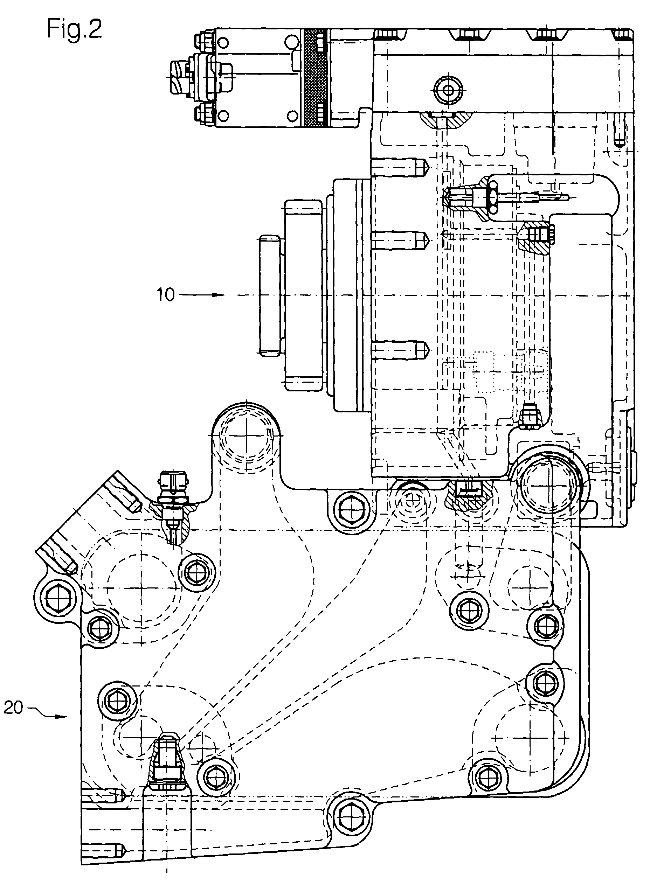

Aus Figur 2 erkennt man die entscheidenden Teile der gesamten Antriebseinheit, nämlich den Retarder 10 sowie den diesen tragenden Adapter 20. Der Retarder weist einen Deckel 11 auf. Er ist an das Getriebe-Endgehäuse 9 angeflanscht.

Wie man sieht, ist der Retarder mit dem Adapter 20 durch Verschraubung mechanisch fest verbunden, ferner ist er mit ihm leitend verbunden.

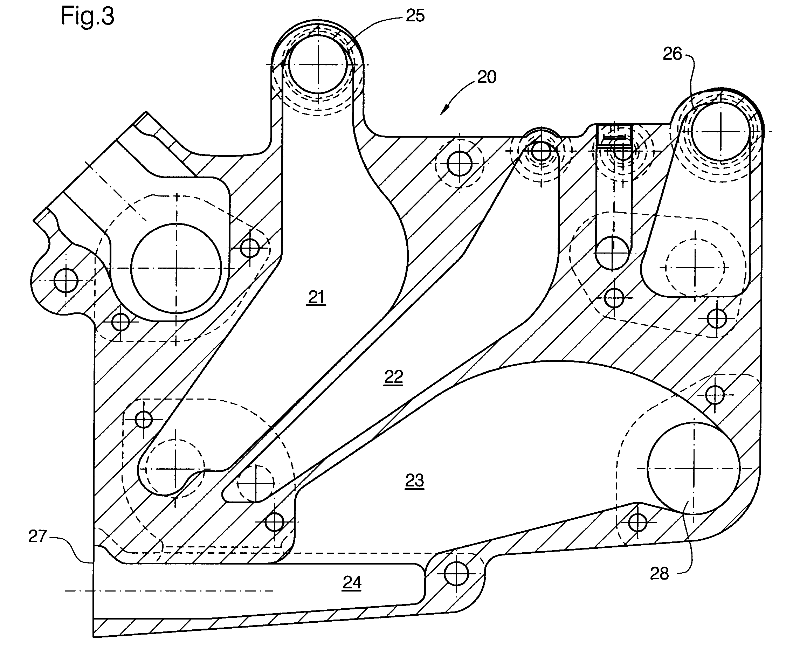

Figur 3 läßt eine Anzahl von Kanälen 21, 22, 23, 24 erkennen, die der Adapter umschließt, ferner eine Anzahl von Anschlüssen, von denen hier nur die Anschlüsse 25, 26, 27 und 28 näher bezeichnet sind.

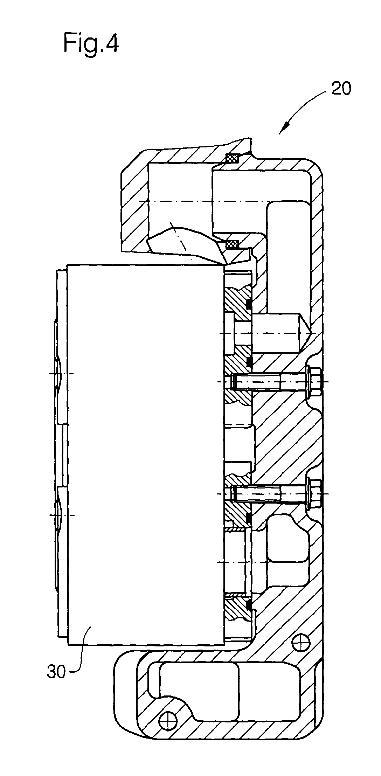

In Figur 4 erkennt man, daß der Adapter 20 einen Wärmetauscher 30 trägt. Auch mit diesem ist er mechanisch fest verbunden und steht bezüglich seiner Kanäle in leitender Verbindung.

Bei der aus Adapter 20 und Wärmetauscher 30 bestehenden Baugruppe sind die ölseitigen Anschlüsse durch Steck- bzw. Klemmverbindungen verwirklicht.

Ist ein Getriebe vorhanden, so versteht es sich, daß der Adapter zur Vermeidung von Wärmespannungen entweder mit dem Getriebe fest verbunden ist, die Verbindungen mit dem Retarder aber Wärmeausdehnungen zulassen, oder umgekehrt.

## Patentansprüche

1. Antriebs-Baugruppe
1.1 mit einem Retarder;
1.2 mit einem Wärmetauscher;
1.3 mit einem Adapter, der Kanäle zum Leiten von Arbeitsmedien und/oder von Kühlmedium aufweist;
1.4 Adapter, Retarder, Wärmetauscher und ggf. ein Getriebe sind mechanisch unmittelbar zusammengefügt und durch die Kanäle des Adapters leitend miteinander verbunden.

2. Antriebs-Baugruppe nach Anspruch 1, dadurch gekennzeichnet, daß der Adapter in Bauteilen wie dem Retarder, dem Wärmetauscher oder dem Getriebe integriert ist.

3. Antriebs-Baugruppe nach Anspruch 1, dadurch gekennzeichnet, daß der Adapter ein eigenständiges Bauteil bildet.

4. Antriebs-Baugruppe nach einem der Ansprüche 1 bis 3, dadurch gekennzeichnet, daß die mechanischen Verbindungen zwischen Adapter, Wärmetauscher, Retarder und ggf. dem Getriebe Steckverbindungen sind.

5. Antriebs-Baugruppe nach einem der Ansprüche 1 bis 4, dadurch gekennzeichnet, daß der Adapter eine Blechkonstruktion ist.

6. Antriebs-Baugruppe nach einem der Ansprüche 1 bis 4, dadurch gekennzeichnet, daß der Adapter eine Gußkonstruktion ist.

7. Antriebs-Baugruppe nach einem der Ansprüche 1 bis 4, dadurch gekennzeichnet, daß der Adapter aus warmfestem Kunststoff besteht.

8. Antriebs-Baugruppe nach einem der Ansprüche 1 bis 7, dadurch gekennzeichnet, daß der Wärmetauscher die Kühlung von Medien mehrerer Bauteile übernimmt.
